**Europäisches Patentamt**

**European Patent Office**

**Office européen des brevets**

(19)

(11) Veröffentlichungsnummer : **0 459 534 B1**

(12)
# EUROPÄISCHE PATENTSCHRIFT

(45) Veröffentlichungstag der Patentschrift :
**09.12.92 Patentblatt 92/50**

(51) Int. Cl.$^5$ : **B01J 35/04,** B01J 37/02,
// B01D53/36

(21) Anmeldenummer : **91113441.9**

(22) Anmeldetag : **14.04.90**

(54) **Monolith- bzw. wabenförmiger Katalysator.**

(30) Priorität : **20.04.89 DE 3912915**

(43) Veröffentlichungstag der Anmeldung :
**04.12.91 Patentblatt 91/49**

(45) Bekanntmachung des Hinweises auf die
Patenterteilung :
**09.12.92 Patentblatt 92/50**

(84) Benannte Vertragsstaaten :
**DE ES FR GB IT SE**

(56) Entgegenhaltungen :
**PATENT ABSTRACTS OF JAPAN, Band 10, Nr.
178 (C-355)[2234], 21. Juni 1986; & JP-A-61 025
644 (TOYOTA MOTOR CORP.)04-02-1986
PATENT ABSTRACTS OF JAPAN, Band 11, Nr.
136 (C-419)[2583], 30. April 1987; & JP-A-62 274
746 (NISSAN MOTOR CO.)04-12-1986**

(60) Veröffentlichungsnummer der früheren
Anmeldung nach Art. 76 EPÜ : **0 399 203**

(73) Patentinhaber : **Degussa Aktiengesellschaft
Weissfrauenstrasse 9
W-6000 Frankfurt am Main 1 (DE)**

(72) Erfinder : **Engler, Bernd, Dr.
Treuener Strasse 2
W-6450 Hanau 9 (DE)**
Erfinder : **Koberstein, Edgar, Dr.
Wolfskernstrasse 8
W-8755 Alzenau (DE)**
Erfinder : **Lox, Egbert, Dr.
Grünaustrasse 9
W-6450 Hanau 9 (DE)**
Erfinder : **Völker, Herbert
Heimbachring 29 a
W-6721 Zeiskam (DE)**

EP 0 459 534 B1

EP 0 459 534 B1

## Beschreibung

Die Erfindung bezieht sich auf einen Monolith- bzw. wabenförmigen Katalysator, insbesondere zur Reinigung der Abgase von Brennkraftmaschinen, aus einem mit parallelen Strömungskanälen durchzogenen inerten keramischen oder metallischen Träger, einer darauf angeordneten Schicht aus katalyseförderndem Metalloxid und einer von dem Metalloxid getragenen katalytisch aktiven Komponente. Der Katalysator weist verbessertes Anspringverhalten auf.

Eine wichtige Eigenschaft von Katalysatoren des Monolith- oder Wabentyps ist die Geschwindigkeit, mit der der Katalysator bei Beaufschlagung mit einem heißen, zu behandelnden Gas die Betriebstemperatur erlangt. Die Anwendung solcher Katalysatoren als Chemiekatalysatoren oder Abgasreinigungskatalysatoren. z. B. für industrielle Abgase oder Motorabgase läßt sich wesentlich durch die Verbesserung dieser Eigenschaft vereinfachen.

Dies wurde bislang durch eine mehr oder weniger kostspielige Erhöhung der Menge an katalytisch aktivem Material oder durch Wärmedämmungsmaßnahmen an der Katalysastoreinheit zu erreichen versucht.

Die Erfindung eröffnet einen neuen Weg zur Lösung des Problems.

Gegenstand der Erfindung ist ein Monolith- bzw. wabenförmiger Katalysator, insbesondere zur Reinigung der Abgase von Brennkraftmaschinen, aus einem mit parallelen Strömungskanälen durchzogenen inerten keramischen oder metallischen Träger, einer darauf angeordneten Schicht aus katalyseförderndem Metalloxid und einer von dem Metalloxid getragenen katalytisch aktiven Komponente, welcher dadurch gekennzeichnet ist, daß das katalysefördernde Metalloxid zwischen Mittelachse und Peripherie des Trägers im wesentlichen gleichverteilt ist und die Konzentration der katalytisch aktiven Komponente von der Mittelachse zur Peripherie des Trägers ansteigt.

Durch erfindungsgemäße Konzentrationsverteilung der katalytisch aktiven Komponente wird eine ausgeglichenere Wärmeentwicklung beim Einsetzen und Ablaufen exothermer Reaktionen bewirkt, indem die Wirkung des naturgegebenen Geschwindigkeitsprofils bei Durchströmung von Monolithen oder Waben, ja sogar leeren Rohren durch Gase, welches um die Mittelachse stärker als an den Randzonen ausgeprägt ist, ausgeglichen wird.

Der erfindungsgemäße Monolith- bzw. Wabenkatalysator kann z. B. in solchen Fällen eingesetzt werden, bei denen die zum Katalysator führenden Anströmwege gleichen Querschnitt wie der Monolith bzw. die Wabe aufweisen, also von Anfang an eine gleichmäßigere Gasbeaufschlagung der Anströmfläche vorliegt.

Ferner wirkt die von der Mittelachse zur Peripherie ansteigende Edelmetall-Konzentration einer Minderung der Konversion in den außenliegenden Monolith- bzw. Wabenbezirken infolge Fahrtwindbedingter Abkühlung des Schadstoffkonverters, in dem sich der Monolith bzw. die Wabe befindet, entgegen.

Das auf die Beladung mit katalytisch aktiver Komponente erfindungsgemäß anzuwendende Konzentrationsprofil, das stufenweise oder kontinuierlich ausgebildet werden soll, läßt sich z. B. stufenweise einstellen, indem eine Stirnfläche während der in mehreren Stufen erfolgenden Beladung durch eine das Zentrum oder den Randbereich abdeckende Maske, z. B. in Form einer Scheibe bzw. eines Ringes, von dem jeweiligen Auftrag freigehalten und die freibleibende Fläche entsprechend der gewünschten Konzentration ein- oder mehrmals mit der aufzutragenden Substanz beladen wird.

Eine kontinuierliche Beladung der katalytisch aktiven Komponente kann durch eine nach Art eines Fotozentralverschlusses stufenlos öffnende oder schließende Lamellenanordnung erreicht werden, wobei diese entsprechend der für eine gewünschte örtliche Beladung erforderlichen Verweilzeit mit variierbarer Geschwindigkeit geöffnet oder geschlossen wird.

Eine kontinuierliche Beladung mit der katalytisch aktiven Komponente kann aber auch erreicht werden, indem eine auf einer Spiralbahn um die Mittelachse des Monolithen bzw. der Wabe rotierende Beaufschlagungsdüse, die gleichzeitig mehrere Kanäle bestreichen kann, mit der eine gewünschte örtliche Beladung erforderlichen Bewegungsgeschwindigkeit betätigt wird.

Die Zufuhrleitung bzw. die Zufuhrdüse kann auch als Drehschieber in Form einer über einer Stirnfläche des Monolithen bzw. der Wabe rotierenden Schlitzplatte mit kontinuierlich längenveränderbarem Schlitz ausgebildet sein.

In Verbindung mit der Anwendung der genannten Masken kann auch über die Strömungsgeschwindigkeit einer Beladungsflüssigkeit die örtliche Konzentration der Beladung beeinflußt werden, wobei letztere im allgemeinen bei Erhöhung des Durchsatzes durch die Kanäle des Monolithen bzw. der Wabe ansteigt.

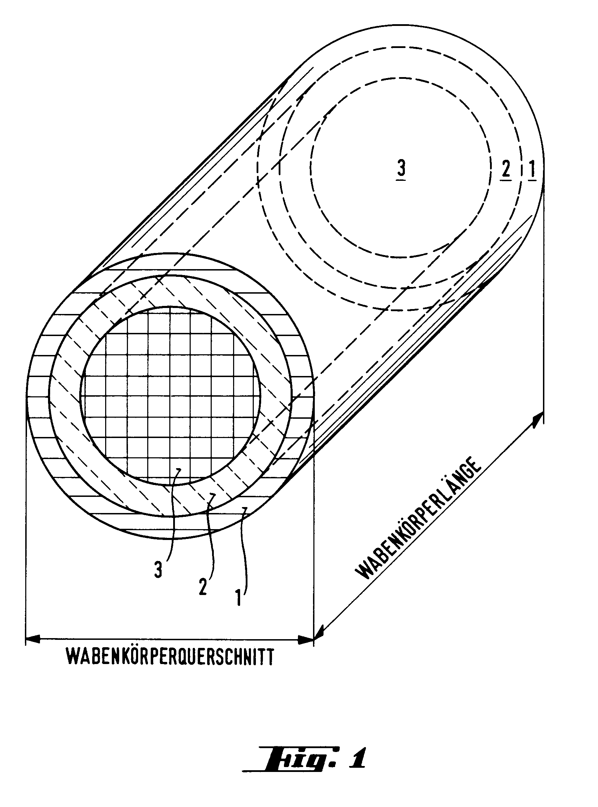

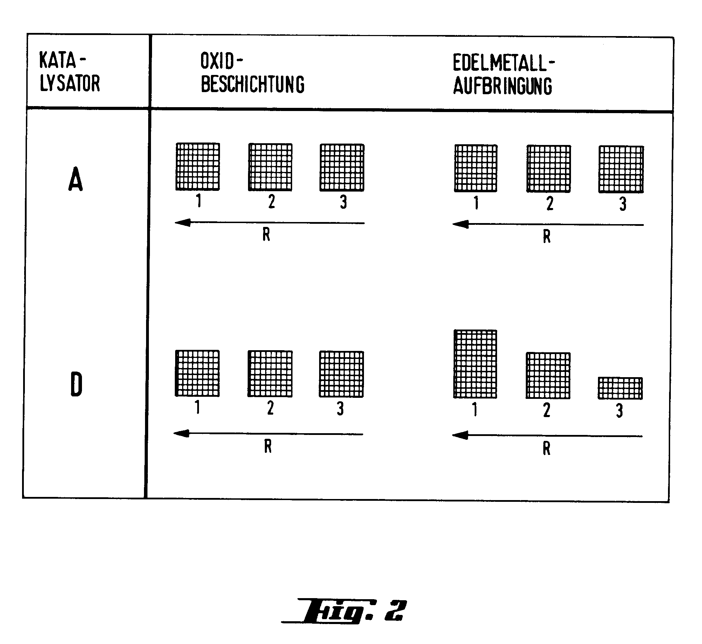

Die Erfindung wird im folgenden anhand von Ausführungsbeispielen in Verbindung mit einer einfachen Versuchsanordnung und einer schematischen Zeichnung mit Figur 1 und Figur 2 näher erläutert.

Beispiel 1

Es wurden zwei Auto-Abgas-Katalysatoren (bezeichnet als Katalysator A und D) mit einem Wabenkörper aus Cordierit mit 62 Zellen/cm$^2$ (400 Zellen/inch$^2$), Durchmesser 118 mm (4.66 inch), Länge 152.4 mm (6 inch), Wandstärke 0.1524 mm (6 mil), hergestellt.

Die Herstellung der Katalysatoren erfolgte in folgenden Schritten:

Der erste Schritt, die Herstellung einer katalyseförderndes mit Promotoren dotiertes Metalloxid enthaltenden Beschichtungssuspension, war identisch für beide Katalysatoren und umfaßte die Dispergierung von hochreinem Gamma-Aluminiumoxidpulver mit einer spezifischen Oberfläche von 180 m$^2$/g in Wasser. Zu dieser Aluminiumoxiddispersion wurden nacheinander unter kräftigem Rühren Cercarbonat und Zirkoncarbonat zugegeben, so daß für 100 Gewichtsteile $Al_2O_3$, 60 Gewichtsteile $CeO_2$ und 3 Gewichtsteile $ZrO_2$ vorlagen.

Der zweite Schritt, die Belegung des Wabenkörpers mit der bereiteten Dispersion, erfolgte bei Katalysator A, dem Vergleichskatalysator, durch langsames Eintauchen des Wabenkörpers in die Dispersion, langsames Herausziehen, Freiblasen der Wabenkörper-Kanäle mittels Luft und anschließendes 10minütiges Trockenblasen des so belegten Wabenkörpers mit Luft bei einer Temperatur von 120° C.

Dieser Vorgang wurde 3 x wiederholt. Anschließend wurde der mit der dotierten $Al_2O_3$-Schicht belegte trockene Wabenkörper während 2 Stunden bei 600° C mit Luft durchströmt, um das Cer- und Zirkoncarbonat in die entsprechenden Oxide umzusetzen. Der so belegte Wabenkörper enthielt 120 Gramm Beschichtung pro Liter Wabenkörper-Volumen.

Beim erfindungsgemäßen Katalysator D wurde die Oxidbeschichtung wie bei Katalysator A aufgebracht.

Der dritte Schritt, gerichtet auf die Herstellung eines Autoabgaskatalysators, betraf die Aufbringung des Edelmetalls.

Für die Katalysatoren A und D wurde hierzu eine wäßrige Lösung von $H_2PtCl_6$ und $RhCl_3$ verwendet. Die gesamte Menge Edelmetall auf dem Katalysator entspricht 0.714 Gramm pro Liter Katalysatorvolumen im Gewichtsmengenverhältnis verhältnis Pt : Rh = 5 : 1.

Für Katalysator A, den Vergleichskatalysator, erfolgte die Edelmetallaufbringung durch einmaliges Eintauchen des mit der Oxidbeschichtung belegten Wabenkörpers in wäßrige Edelmetall-Lösung, anschließendes 4stündiges Trocknen an Luft bei 250° C und 2stündiges Kalzinieren bei 600° C in Luft. Katalysator A enthielt die Edelmetalle sowohl über dem Wabenkörperquerschnitt als auch über die Wabenkörperlänge homogen verteilt.

Katalysator D enthielt das Edelmetall über dem Wabenkörperquerschnitt inhomogen verteilt, so daß an dessen Rand (Zone 1) mehr Edelmetall vorlag als in dessen Mitte (Zone 3). Um dies zu erreichen, wurde die Edelmetallimprägnierung in drei Schritten durchgeführt.

Im ersten Tauchschritt wurde der Wabenkörper ohne weitere Maßnahmen in die wäßrige Lösung der Edelmetallsalze getaucht. Vor dem zweiten Schritt wurde Zone 3 auf beiden Stirnflächen des Wabenkörpers abgeklebt, und vor dem dritten Tauchschritt wurden sowohl Zone 2 als auch Zone 3 auf beiden Stirnflächen des Wabenkörpers abgeklebt.

Nach diesen drei Tauchschritten erfolgte eine 4stündige Trocknung an Luft bei 250° C und anschließend eine 2stündige Kalzinierung in Luft bei 600° C.

Katalysator D enthielt in Zone 1, d.h. am Rand des Wabenkörperquerschnitts, 0.832 Gramm Edelmetall pro Liter Katalysatorvolumen, in Zone 2 waren 0.620 Gramm vorhanden und in Zone 3, d. h. in der Mitte des Wabenkörperquerschnitts, 0.436 Gramm, jeweils im Gewichtsverhältnis Pt : Rh = 5 : 1.

Die Katalysatoren A und D wurden im letzten Schritt der Herstellung während 8 Stunden bei 550° C im Wasserstoffstrom reduziert.

Die Verteilung von Washcoat- und Edelmetallmenge über dem Wabenkörperquerschnitt ist in Abbildung 2 für die Katalysatoren A und D dargestellt (R = Abstand zwischen Mittelachse und Peripherie (Pfeilspitze), 1, 2 und 3 bedeuten die Zonen).

Beispiel 2

Die Katalysatoren A und D von Beispiel 1 wurden an einem Motorprüfstand, sowohl frisch als auch nach einer 20stündigen Motoralterung, geprüft, wobei die Temperatur der Abgase bei der Alterung am Eintritt des Katalysators 1000° C erreichte.

Für die Überprüfung der Katalysatorleistung und für die Motoralterung wurde ein 1.8 l-Ottomotor verwendet. Alle Tests wurden mit bleifreiem Superbenzin gefahren.

Die Überprüfung der Katalysatorleistung erfolgte anhand von zwei Tests.

Im ersten Test wurde das Anspringverhalten des Katalysators überprüft, d. h. es wurde die Temperatur bestimmt, bei der 50 % der Kohlenwasserstoffe, des Kohlenmonoxids und der Stickoxide umgewandelt werden.

3

Dies erfolgte bei Lambda = 1.02 für Kohlenmonoxid und Kohlenwasserstoffe und bei Lambda = 0.9840 für die Stickoxide. Die Raumgeschwindigkeit bei diesem Test betrug 60.000 Normliter Abgas pro Liter Katalysatorvolumen und Stunde.

Im zweiten Test wurde die Konvertierung von Kohlenmonoxid, Kohlenwasserstoffen und Stickoxiden in Abhängigkeit vom Lambda-Wert bei 400° C Abgastemperatur vor Katalysator und 60.000 Normliter Abgas pro Liter Katalysatorvolumen und Stunde Raumgeschwindigkeit bestimmt.

Das Anspringverhalten der frischen Katalysatoren A und D ist in Tabelle 1 dargestellt.

Aus den Ergebnissen folgt, daß die Anspringtemperatur für Kohlenmonoxid- und Kohlenwasserstoffkonversion durch die erfindungsgemäße Verteilung des Edelmetalls über dem Wabenkörperquerschnitt um 6 bzw. 7° C gesenkt werden kann.

Das Anspringverhalten der motorgealterten Katalysatoren A und D ist in Tabelle 2 dargestellt.

Aus diesen Ergebnissen ist noch deutlicher zu sehen, daß durch eine gezielte Positionierung der Edelmetalle über den Querschnitt der Wabenkörper die Anspringtemperatur für Kohlenmonoxid und Kohlenwasserstoffe um 10 bzw. 9° C und für die Stickoxide um 41° C gesenkt werden kann.

TABELLE 1:   Temperatur für 50 % Konvertierung

(frische Katalysatoren)

| Katalysator | Lambda = 1.02 | | Lambda = 0.984 |
| --- | --- | --- | --- |
| | $CO_{50\%}$ ($^{\circ}$ C) | $HC_{50\%}$ ($^{\circ}$ C) | $NO_x\ 50\%$ ($^{\circ}$ C) |
| A (Vergleich) | 312 | 313 | 328 |
| D | 306 | 306 | 337 |

TABELLE 2: Temperatur für 50 % Konvertierung
(gealterte Katalysatoren)

| Katalysator | Lambda = 1.02 | | Lambda = 0.984 |
|---|---|---|---|
| | $CO_{50\%}$ $(^{\circ}C)$ | $HC_{50\%}$ $(^{\circ}C)$ | $NO_{x\ 50\%}$ $(^{\circ}C)$ |
| A | 336 | 340 | 388 |
| D | 326 | 331 | 347 |

**Patentansprüche**

1.  Monolith- bzw. wabenförmiger Katalysator, insbesondere zur Reinigung der Abgase von Brennkraftmaschinen, aus einem mit parallelen Strömungskanälen durchzogenen inerten keramischen oder metallischen Träger, einer darauf angeordneten Schicht aus katalyseförderndem Metalloxid und einer von dem Metalloxid getragenen katalytisch aktiven Komponente,
    **dadurch gekennzeichnet,**
    daß das katalysefördernde Metalloxid zwischen Mittelachse und Peripherie des Trägers im wesentlichen gleichverteilt ist, jedoch die Konzentration der katalytisch aktiven Komponente von der Mittelachse zur Peripherie des Trägers ansteigt.

**Claims**

1.  A monolithic or honeycomb catalyst, more particularly for purifying the exhaust gases from internal combustion engines, comprising an inert ceramic or metal carrier formed with parallel flow channels, a layer of catalysis-promoting metal oxide disposed thereon and a catalytically active component carried by the metal oxide,
    characterised in that
    the catalysis-promoting metal oxide is distributed substantially uniformly between the central axis and the periphery of the carrier, but the concentration of the catalytically active component increases from the central axis to the periphery of the carrier.

**Revendications**

1.  Catalyseur en forme de monolithe ou de nid d'abailles en particulier pour la purification des gaz d'échappement de moteurs à combustion Interne à base d'un support inerte en céramique ou en métal traversé par des canaux parallèles d'afflux, d'une couche disposée par dessus en oxyde métallique stimulant la catalyse et d'un composant actif catalytiquement porté par l'oxyde métallique,
    caractérisé en ce que l'oxyde métallique stimulant la catalyse est réparti essentiellement de façon égale entre l'axe médian et la périphérie du support, et en ce que cependant la concentration du composant actif catalytiquement va en croissant de l'axe médian vers la périphérie du support.

5

**Fig. 1**

| KATA-LYSATOR | OXID-BESCHICHTUNG | | | EDELMETALL-AUFBRINGUNG | | |
|---|---|---|---|---|---|---|
| A | 1 | 2 | 3 | 1 | 2 | 3 |
| | ← R | | | ← R | | |
| D | 1 | 2 | 3 | 1 | 2 | 3 |
| | ← R | | | ← R | | |

Fig. 2